Europäisches Patentamt

(19) European Patent Office

Office européen des brevets

(11) **EP 0 562 111 B1**

(12) **EUROPEAN PATENT SPECIFICATION**

(45) Date of publication and mention
of the grant of the patent:
**01.10.1997 Bulletin 1997/40**

(21) Application number: **91907711.5**

(22) Date of filing: **17.04.1991**

(51) Int. Cl.$^6$: **B23K 10/00**, B23K 9/12

(86) International application number:
**PCT/JP91/00514**

(87) International publication number:
**WO 91/16170 (31.10.1991 Gazette 1991/25)**

(54) **STANDOFF CONTROL METHOD AND APPARATUS FOR PLASMA CUTTING MACHINE**

ABSTANDSTEUERVERFAHREN UND -VORRICHTUNG EINER PLASMASCHNEIDMASCHINE

PROCEDE ET APPAREIL DE COMMANDE DE L'ECART POUR MACHINE DE DECOUPAGE PAR FUSION PLASMA

(84) Designated Contracting States:
**DE FR GB IT**

(30) Priority: **17.04.1990 JP 102329/90**
**17.04.1990 JP 102330/90**
**17.04.1990 JP 102656/90**
**17.04.1990 JP 102657/90**

(43) Date of publication of application:
**29.09.1993 Bulletin 1993/39**

(60) Divisional application: **97250094.6**
**97250095.3**

(73) Proprietor:
**KABUSHIKI KAISHA KOMATSU SEISAKUSHO**
**Minato-ku Tokyo 107 (JP)**

(72) Inventors:
• **NISHI, Yozo,**
**c/o Komatsu Research Laboratory**
**Hiratsuka-shi Kanagawa 254 (JP)**

• **NOZAKI, Eiichi,**
**c/o Komatsu Research Laboratory**
**Hiratsuka-shi Kanagawa 254 (JP)**
• **HASEGAWA, Masahiko,**
**c/o Komatsu Research Lab.**
**Hiratsuka-shi Kanagawa 254 (JP)**
• **KUROKAWA, Iwao,**
**c/o Komatsu Research Laboratory**
**Hiratsuka-shi Kanagawa 254 (JP)**
• **WAKUI, Atsushi,**
**c/o Komatsu Research Laboratory**
**Kanagawa 254 (JP)**

(74) Representative: **Meissner, Peter E., Dipl.-Ing. et al**
**Meissner & Meissner,**
**Patentanwaltsbüro,**
**Postfach 33 01 30**
**14171 Berlin (DE)**

(56) References cited:
**EP-A- 0 167 390**

• **PATENT ABSTRACTS OF JAPAN vol. 13, no. 237**
**(M-833)5 June 1989 & JP-A-10 48 674**

Printed by Rank Xerox (UK) Business Services
2.14.14/3.4

## Description

Technical Field

The present invention relates to a standoff control method and an apparatus for controlling the standoff between a torch of a plasma cutting machine and a work to be cut, the plasma cutting machine being arranged to cut the work by generating a plasma arc between an electrode thereof and the work.

Background Art

A plasma cutting machine has a nozzle disposed to surround an electrode thereof so as to form a fluid passage for an operation gas and throttle a plasma generated in front of the leading portion of the electrode between the electrode and the work to be cut so that the temperature of the plasma is raised and the size of the plasma arc is made to be uniform for the purpose of obtaining an excellent cut surface. However, if the distance between the torch composed of the electrode and the nozzle and the work to be cut is changed, the plasma arc cannot be maintained or an excellent cut shape cannot be obtained because the size of the plasma arc is changed. Hence, the plasma cutting machine has been arranged in such a manner that the distance (hereinafter called a "standoff") between the torch and the work to be cut is kept constant so that the cutting work is performed satisfactorily.

In a case where the standoff is controlled, a fact has been known that the arc voltage across the electrode or the nozzle and the work to be cut has a proportional relationship with the standoff. The relationship can be utilized to detect the arc voltage, and the detected arc voltage is maintained at a constant value (refer to Japanese Patent Laid-Open No. 57-195582 for example).

However, the aforesaid conventional method is arranged in such a manner that the quantity of the displacement of the torch is simply changed in accordance with the level of the deviation between the detected arc voltage and a reference voltage. Therefore, if the deviation is excessively large, it takes a too long time to realize a predetermined standoff, causing a delay of response to take place. As a result, a satisfactory cutting accuracy cannot be obtained. The aforesaid method is arranged in such a manner that, if the deviation has become excessively large, an abnormal-voltage detection circuit disposed individually from a circuit for controlling the standoff detects it so as to turn off the arc voltage. Therefore, the efficiency of the cutting operation deteriorates. What is worse, if the deviation becomes excessively toward negative values, the torch is moved downwards and the arc is turned off by the abnormal-voltage detection circuit so that the deviation is converted into positive values. Hence, the continuation of the downward movement of the torch will cause the torch to collide with the work to be cut, and therefore there is a risk that the torch or the work to be cut is damaged.

Furthermore, no consideration has not been taken against the change in the arc voltage with respect to rise of the arc voltage or change in the cutting speed due to the consumption of the electrode. As a result, the quantity of the standoff is changed due to the consumption of the electrode or the cutting speed. Therefore, an excellent cutting operation cannot be performed.

In another case in which rebounds of molten metal adhere to a portion adjacent to the nozzle after the torch has approached the work to be cut, or in another case in which the gas flow is disorder due to deformation of the nozzle, double-arc takes place, for example, between the work to be cut and the nozzle. Hence, the nozzle can be damaged, causing the cutting work to be interrupted. Therefore, an apparatus has been suggested (refer to, for example Japanese Patent Publication No. 60-43831) which is arranged in such a manner that attention has been paid to a fact that the output voltage from the power source for generating the plasma arc is reduced when the torch has come more closer to the work to be cut than a predetermined distance and when the impedance has been reduced, and the output from the power source is shut if the aforesaid voltage has become lower than a reference voltage so that the torch is protected. However, the cutting operation is temporarily stopped and the working efficiency deteriorates because a command signal to cause the output from the power source for generating the plasma arc to be zero is outputted at the time of the generation of the double-arc.

Another method and apparatus has been known (refer to, for example, Japanese Patent Laid-Open No. 62-24864) which detects the use limit of the electrode in accordance with the change of the arc electric current, which is generated between the electrode and the work to be cut, and the voltage. However, since the use limit is detected in accordance with the changes of the waveforms of the electric current and the voltage ate the time of the use limit of the electrode, it can be detected after the electrode has been damaged. Therefore, the work to be cut is wasted and the nozzle is damaged. Furthermore, the aforesaid method arranged to detect the use limit in accordance with the voltage cannot easily be put into practical use because the voltage value is changed when the cutting conditions are changed.

A further method and apparatus according to the preambles of claims 1, 4, resp., is known from JP-A-10 48 674. Said method discloses automatically setting a desired reference value of a welding torch height by detecting the arc voltage or an arc current when the welding torch is at a desired height position and sampling and holding its detected result to set it as the reference value. The position of the welding torch is corrected by a y axis driving controller so that the difference is diminished to zero.

In order to overcome the aforesaid problems experienced with the conventional technology, the object of the present invention is to provide a standoff control method and an apparatus for a plasma cutting machine capable of quickly correcting deviation of standoff from a set value, capable of keeping constant standoff even if the cutting speed has been changed, capable of preventing the drop of working efficiency even at the time of occurrence of double-arc and capable of accurately detecting the use limit of an electrode even if the cutting conditions have been changed.

Disclosure of the Invention

The present invention according to claim 1 provides a standoff control method for a plasma cutting machine in which the voltage across an electrode or a nozzle and a work to be cut is detected so as to calculate a deviation from a reference voltage for the purpose of raising the elevation speed of the torch in accordance with the calculated deviation. The standoff control method for a plasma cutting machine is arranged in such a manner that the elevation speed of the torch is made to be zero (0) when the deviation of the voltage across the electrode or the nozzle surrounding the electrode and the work to be cut with respect to the reference voltage is included in a predetermined first value range. Furthermore, if the deviation has exceeded the first value, the elevation speed of the torch is linearly raised. If the deviation is larger than a predetermined second value, the elevation speed of the torch is linearly raised at a higher rate. If the deviation has exceeded a predetermined third value, the torch is moved upwards at a high speed.

As a result of the structure thus arranged, the torch can be quickly returned to a predetermined standoff position so that the work can be cut satisfactorily and accurately. If the deviation is included by a predetermined first value range, the elevation of the torch is inhibited so that the cutting accuracy is further improved. That is, if a slight change of the standoff is adjusted, the torch can be always elevated causing the cut surface to become rough excessively. Hence, the cutting operation cannot be performed satisfactorily. Therefore, in a case where the change of the standoff is included by a predetermined range, that is, if the deviation is included by a predetermined range (non-sensitive zone), the adjustment of the standoff is not performed so as to obtain an excellent cut surface shape. If the deviation has exceeded the non-sensitive zone, the elevation speed of the torch is raised in proportion to the degree of the deviation so that the torch is quickly returned to a predetermined standoff position. If the deviation has exceeded a predetermined second value, the ratio of the elevation speed of the torch made to be in proportion to the deviation is further enlarged so as to as quickly as possible position the torch at a predetermined standoff position for the purpose of satisfactorily performing the cutting operation. Furthermore, the overshooting of the torch 10 can be prevented because the elevation speed of the torch 10 is lowered in proportion to the deviation. If the deviation has exceeded a predetermined third value, the torch is moved upwards at a high speed depending upon a discrimination made that the plasma cutting machine has encountered an abnormal accident so that the problem that the torch comes in contact with the work to be cut is prevented.

The invention according to claim 4 further provides a standoff control device for a plasma cutting machine having a standoff correction computing device which includes a reference voltage computing setter for outputting a reference voltage between an electrode or a nozzle and a work to be cut with respect to a predetermined standoff, an error computing device for calculating the deviation between the detected voltage and the aforesaid reference voltage, and a correction quantity computing device for outputting a torch elevation speed signal in accordance with the degree of the aforesaid deviation. The standoff correction computing device includes an electrode consumption/standoff detector which receives the aforesaid detected voltage so as to output, to the error computing device, a standoff signal obtained by correcting the degree of rise of the voltage taken place due to the consumption of the electrode. Furthermore, the reference voltage computation setter outputs, as the reference voltage, a voltage obtained by adding the degree of the change of the arc voltage taken place due to the deviation of the cutting speed from the reference cutting speed to the arc voltage with respect to a predetermined standoff. The aforesaid reference voltage computation setter may receive the aforesaid detected voltage and output the supplied detected voltage as the reference voltage when the torch has been positioned at a predetermined standoff position and the cutting operation has been commenced.

As a result of the structure thus arranged, the electrode consumption/standoff detector subtracts the portion of the rise of the voltage taken place due to thee consumption of the electrode from the detected voltage. Therefore, the change of the standoff due to the consumption of the electrode can be prevented. Since the reference voltage computation setter outputs the reference voltage obtained by adding the change of the arc voltage taken place due to the change of the cutting speed. the standoff of the torch can be kept constant even if the cutting speed has been changed. Hence, the cutting accuracy can be improved. By setting the reference voltage made by the reference voltage computation setter to be the arc voltage to be generated when the torch is set to the standoff position and the cutting operation is commenced, the influence of the consumption of the electrode can be eliminated and the reference voltage can easily be set.

Brief Description of the Drawings

Fig. 1 is a graph which illustrates the relationship between a deviation and the elevation speed of a torch according to a first invention;
Fig. 2 is a block diagram which illustrates a plasma cutting machine according to a second invention;

Fig. 3 is a view which illustrates the detailed structure of the standoff correction computing device shown in Fig. 2;

Fig. 4 is a graph which illustrates the relationship between standoff and arc voltage;

Fig. 5 is a view which illustrates an example of a table with which the reference voltage computation setter shown in Fig. 3 calculates the voltage;

Fig. 6 is a graph which illustrates the relationship between the number of uses of an electrode and the arc voltage;

Fig. 7 is a graph which illustrates the relationship between the cutting speed and the arc voltage;

Fig. 8 is a flow chart which illustrates an applicable example relating to the first invention;

Best Mode for Carrying Out the Invention

A preferred embodiment of a standoff control method and an apparatus for a plasma cutting machine according to a first and second inventions will now be described in detail with reference to the drawings.

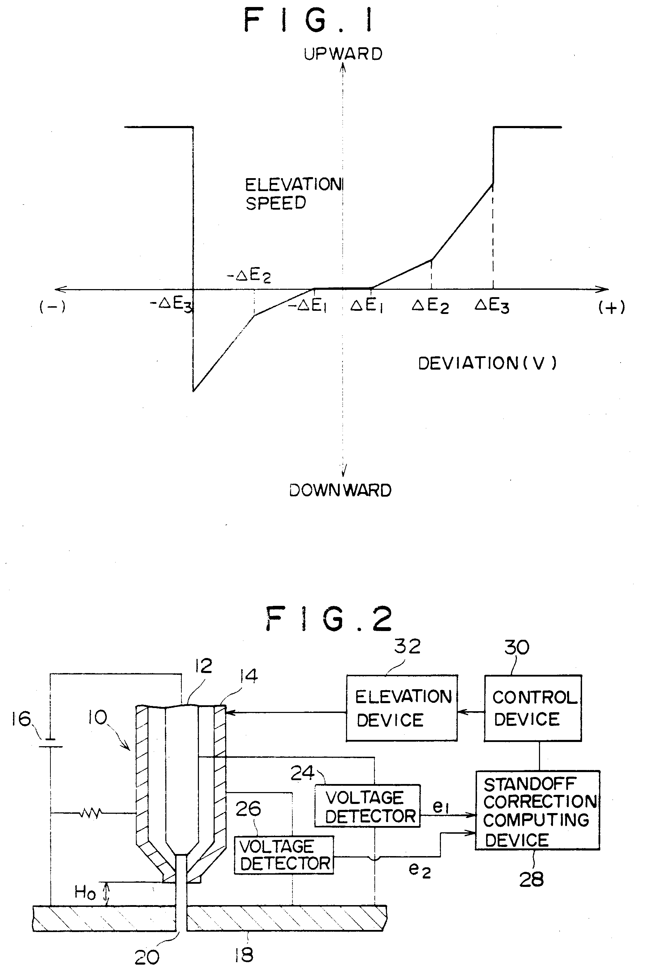

Fig. 2 is a block diagram which illustrates the plasma cutting machine, wherein a torch 10 of the transfer-arc-type plasma cutting machine has a nozzle 14 disposed to surround an electrode 12 thereof, the nozzle 14 forming a fluid passage (omitted from illustration) for an operation gas. The electrode 12 is electrically connected to the nozzle 14 and a work 18 to be cut via a DC power source 16 so that a pilot arc is generated between the electrode 12 and the nozzle 14 and as well as a main plasma arc 20 between the electrode 12 and the work 18 to be cut. On the other hand, the lower portion of the nozzle 14 is contracted so as to throttle the plasma arc 20 in order to obtain a hot temperature plasma.

The electrode 12, the nozzle 14 and the work 18 to be cut are respectively connected to voltage detectors 24 and 26. The voltage detector 24 detects the voltage across the electrode 12 and the work 18 to be cut so as to supply detected voltage $e_1$ to a standoff correction computing device 28 to be described later. The residual voltage detector 26 detects the voltage between the nozzle 14 and the work 18 to be cut so gas to supply detected voltage $e_2$ to the standoff correction computing device 28.

The standoff correction computing device 28 calculates the direction, speed and the quantity of the elevation of the torch in accordance with supplied detected voltages $e_1$ and $e_2$ so as to supply the results to a control device 30 which is connected to the output side of the standoff correction computing device 28. The control device 30 drives a lifting device 32 in accordance with a quantity to be controlled supplied from the standoff correction computing device 28 so as to elevate the torch 10 in such a manner that the standoff between the torch 10 and the work 18 to be cut becomes aimed standoff $H_0$.

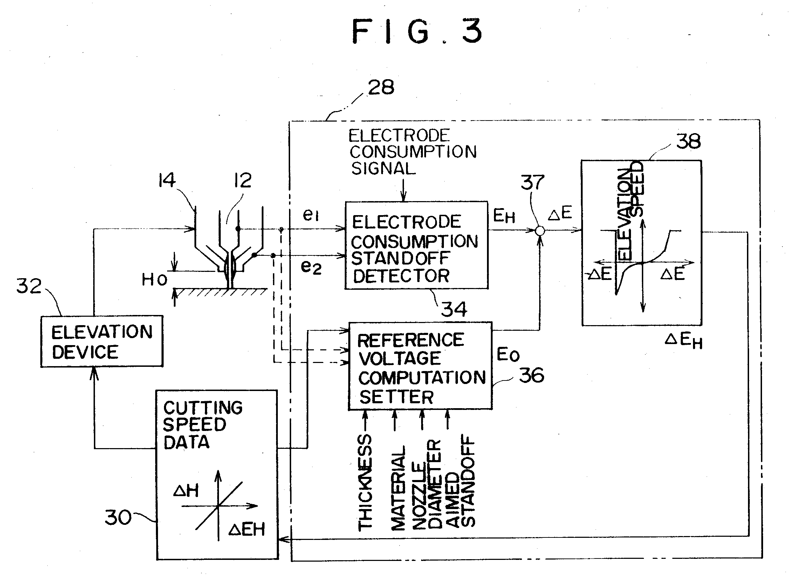

The standoff correction computing device 28, as shown in Fig. 3, comprises an electrode consumption/standoff detector 34, a reference voltage computation setter 36, an error computing device 37 to which signals from them are supplied, and a correction quantity computing device 38 for calculating a correction quantity, with which the torch 10 is elevated, in accordance with an error outputted from the error computing device 37.

The electrode consumption/standoff detector 34 receives detected voltages $e_1$ and $e_2$ outputted from the voltage detectors 24 and 26 so as to calculate the consumption quantity of the electrode 12, the electrode consumption/standoff detector 34 outputting an electrode consumption signal, which corresponds to the consumption quantity, to a display device (omitted from illustration). Furthermore, the electrode consumption/standoff detector 34 calculates actual standoff H and outputs standoff signal $E_H$, which denotes it, to the error computing device 37. The reference voltage computation setter 36 outputs, to the error computing device 37, reference voltage signal $E_0$ which denotes data about thee thickness and the material of the work 18 to be cut, the nozzle diameter, the aimed standoff $H_0$ and cutting speed.

The correction quantity computing device 38, as shown in Fig. 1, stores a graph so as to output correction voltage signal $\Delta E_H$, the level of which corresponds to deviation $\Delta E$, to the control device 30 for the purpose of returning the torch 10 to the aimed standoff $H_0$ in accordance with the deviation $\Delta E$ with respect to the reference voltage $E_0$ of the standoff signal $E_H$ outputted from the error computing device 37. That is, the graph stored by the correction quantity computing device 38 does not output thee correction signal if the deviation is included in a predetermined first deviations range $\pm \Delta E_1$. If the deviation $\Delta E$ is between $+ \Delta E_1$ and $+ \Delta E_2$, correction voltage signal $\Delta E_H$, with which the rising speed of the torch 10 is raised in proportion to the deviation, is outputted. If the deviation $\Delta E$ is between $- \Delta E_1$ and $- \Delta E_2$, correction voltage signal $- \Delta E_H$, with which the lowering speed of the torch 10 is raised in proportion to the deviation, is outputted. If the deviation $\Delta E$ exceeds the second value $\pm \Delta E_2$, correction voltage signal $\Delta E_H$, with which the ratio of the rising or lowering speed of the torch 10 corresponding to the deviation is further enlarged, is outputted. If the deviation $\Delta E$ exceeds a predetermined third value $\pm \Delta E_3$, a discrimination is made that the apparatus has encountered abnormality and therefore the torch 10 is rapidly upwards moved.

The standoff of the plasma cutting machine, thus structured, is controlled as follows: The arc voltage is changed in proportion to the value of the standoff. The aforesaid standoff is determined in accordance with the thickness and the material of the work 18 to be cut, the diameter of the nozzle 14 and the cutting speed. Therefore, the reference voltage computation setter 36 of the standoff correction computing device 28 calculates arc voltage $e_0$ with respect to reference cutting speed $V_0$

(assumed to be 1 m/s) in accordance with the following Equation (1) when the thickness and the material of the work 18 to be cut, the aimed standoff $H_0$ and the like are, supplied from a keyboard or a control panel (omitted from illustration):

$$e_0 = \{K_{S1} + K_{S2} (H_0 + K_t)\} \times K_N \qquad (1)$$

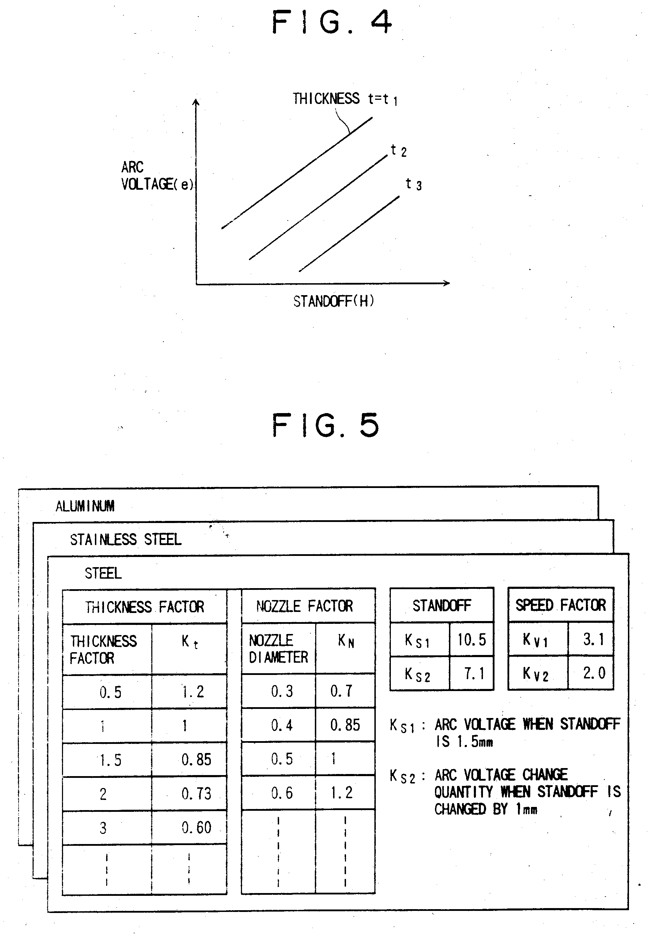

where $K_{S1}$, $K_{S2}$, $K_t$ and $K_N$ are factors obtainable from experiments in accordance with the thickness and the material of the work 18 to be cut and the like, the aforesaid factors being previously stored by the correction quantity computing device 38 as a table arranged as shown in Fig. 5.

Incidentally, the reference voltage computation setter 36 may be arranged in such a manner that the arc voltage corresponding to the standoff, which is determined in accordance with the values of the thickness and the material of the work 18 to be cut, the nozzle diameter and the cutting speed, is stored therein as graphs arranged as shown in Fig. 4 and, when the conditions, such as the thickness and the material, for cutting the work 18 to be cut are supplied from the control panel or the like, a graph which corresponds to the supplied values is selected so as to output the reference voltage $E_0$ which is determined in accordance with the supplied aimed standoff $H_0$.

The control device 30 has been previously supplied with a cutting program to determine the shape of cutting the work 18 and the cutting speed so as to cause the lifting device 32 to downwards move the torch 10 to a position at which the arc voltage across the electrode 12 and the work 18 to be cut is $e_0$. Thus, the cutting operation is commenced.

When the cutting operation has been commenced, the voltage detectors 24 and 26 respectively obtain the detected voltage $e_1$ across the electrode 12 and the work 18 and $e_2$ across the torch 10 and the work 18 to be cut at predetermined intervals so as to supply them to the electrode consumption/standoff detector 34 of the standoff correction computing device 28.

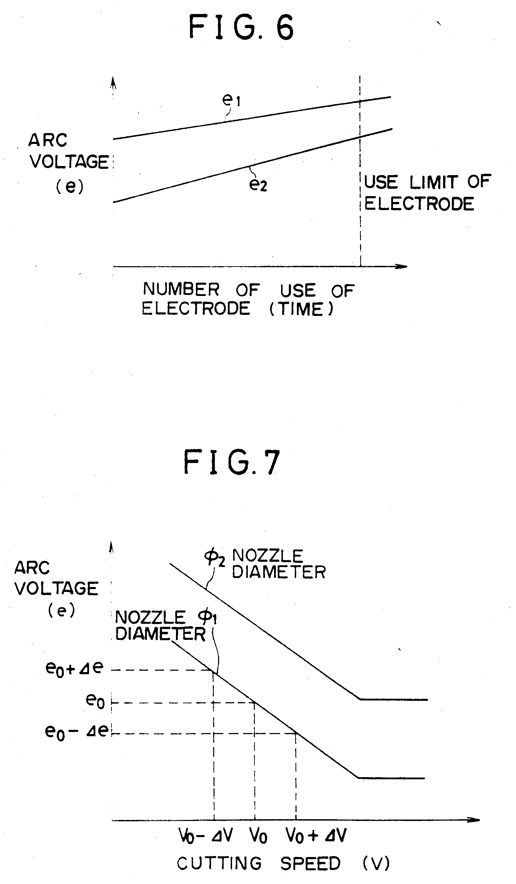

Even if the aimed standoff $H_0$ is kept constant, the aforesaid arc voltages $e_1$ and $e_2$ are changed as shown in Fig. 6 due to the consumption of the electrode. Therefore, the electrode consumption/standoff detector 34 calculates electrode consumption component $E_p$ from the following Equation (2) and standoff component $E_s$ from Equation (3) so as to calculate the consumption quantity of the electrode 12 from the aforesaid equations for the purpose of outputting an electrode consumption signal corresponding to the consumption quantity to a display device or the like (omitted from illustration) so that it is displayed:

$$E_p = ae_1 + be_2 \qquad (2)$$

$$E_s = a_1 e_1 + b_1 e_2 \qquad (3)$$

Then, the electrode consumption/standoff detector 34 outputs, to the error computing device 37, the standoff signal $E_H$ obtained by subtracting the portion of rise of the voltage due to the consumption of the electrode 12 shown in Fig. 6 from the detected voltage $e_1$.

When the torch 10 starts cutting, cutting speed V detected by a cutting speed sensor (omitted from illustration) or cutting speed data (cutting speed V) from the control device 30 is supplied to the reference voltage computation setter 36. The reference voltage computation setter 36 corrects the arc voltage $e_0$ in accordance with the supplied cutting speeds V so as to output the reference voltage $E_0$.

That is, the arc voltage e has a relationship as shown in Fig. 7 with the cutting speed V, and therefore it is lowered when the cutting speed V is raised and it is raised when the cutting speed V is lowered. Hence, even if the torch 10 is kept at the aimed standoff $H_0$, the change of the cutting speed V will cause the error to be outputted from the error computing device 37 to be changed. Therefore, the torch 10 is deviated from the aimed standoff $H_0$, causing the cut shape to deteriorate. Accordingly, the reference voltage computation setter 36 calculates voltage $\Delta e$, which must be corrected, of the arc voltage $e_0$ obtained to correspond to the aimed standoff $H_0$ from the graph shown in Fig. 7 and stored to correspond to the values of the thickness and the material of the work 18 to be cut, the diameter of the nozzle 14 and the aimed standoff $H_0$ with respect to the cutting speed $V_0$, and calculates the reference voltage $E_0$ as follows and outputs it to the error computing device 37:

$$E_0 = e_0 \pm \Delta e \qquad (4)$$

That is, in a case where the cutting speed V has become lower than a reference, a value obtained by subtracting the voltage raised portion $\Delta e$ from $e_0$ is outputted as the reference voltage $E_0$. In a case where the cutting speed V has become higher than a reference, a value obtained by adding a portion of reduction $\Delta e$ to $e_0$ is outputted as the reference voltage $E_0$. However, if the cutting speed V has exceeded 2 m/s, the correction quantity $\Delta e$ becomes constant.

The correction of the reference voltage $E_0$ with the cutting speed V may be performed in accordance with the following calculations:

when $0 < V \leq K_{V2}$

$$E_0 = e_0 - K_{V1} \times (V - 1) \qquad (5)$$

when $V > K_{V2}$

$$E_0 = e_0 - K_{V1} \times (K_{V2} - 1) \qquad (6)$$

where $K_{V1}$ and $K_{V2}$ are speed factors shown in Fig. 5.

The error computing device 37 calculates the error $\Delta E$ of the standoff signal $E_H$ outputted from the electrode consumption/standoff detector 34 with respect to the reference voltage $E_0$ so as to output it to the correction quantity computing device 38. That is, in a case where the standoff of the torch 10 has become larger than the aimed standoff $H_0$ and the standoff signal $E_H$ is larger than the reference voltage $E_0$, the error computing device 37 outputs positive error + $\Delta E$ which corresponds to the level of the standoff signal $E_H$. In the contrary case, it outputs negative error - $\Delta E$.

The correction quantity computing device 38 outputs, to the control device 30, the correction voltage signal $\Delta E_H$ for the purpose of rapidly restoring the torch 10 to the aimed standoff $H_0$ to correspond to the supplied error $\Delta E$ in accordance with the graph shown in Fig. 1. When the control device 30 receives the correction voltage signal $\Delta E_H$, it calculates the elevation speed of the torch 10 and the quantity of the elevation of the torch 10, and drives the lifting device 32 so as to elevate the torch 10 so that the torch 10 is restored to the aimed standoff $H_0$.

Since the speed of elevating the torch 10 is, as described above, raised in accordance with the error $\Delta E$ of the detected voltage $e_1$ between the electrode 12 and the work 18 to be cut with respect to the reference voltage $E_0$, the torch 10 can be quickly restored to the aimed standoff $H_0$ even if the torch 10 is deviated from the aimed standoff $H_0$ so that the cutting operation can be performed satisfactorily. Furthermore, since a non-sensitive zone, which does not output the correction signal, is formed in a portion in which the error $\Delta E$ is small, unstable change of the torch 10 adjacent to the aimed standoff $H_0$ can be prevented and therefore an excellent cut surface can be obtained. Furthermore, since the change of the arc voltage due to the consumption of the electrode 12 and the change of the arc voltage taken place in accordance with the change of the cutting speed are corrected, the cutting operation can be performed further satisfactorily. In addition, since the ratio of the change of the elevation of the torch 10 is reduced in a portion in which the error $\Delta E$ is small, overshoot of the torch 10 can be prevented. As an alternative to the detected voltage $e_1$ between the electrode 12 and the work 18 to be cut, the detected voltage $e_2$ between the nozzle 14 and the work 18 to be cut may be utilized to control the aimed standoff $H_0$.

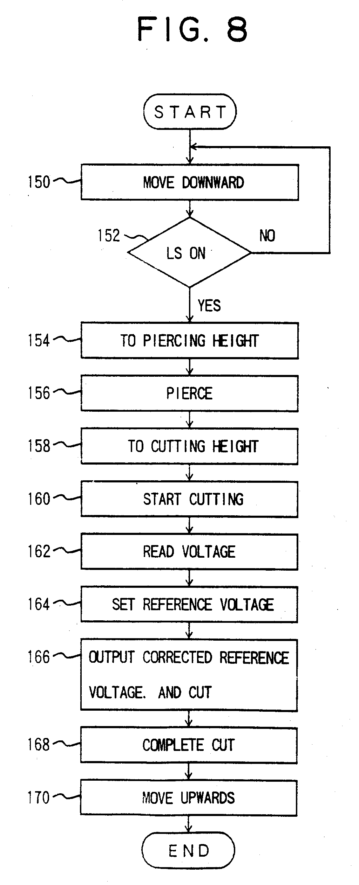

Then, an applicable example of this embodiment will now be described with reference to a flow chart shown in Fig. 8. The application example is arranged in such a manner that the detected voltages $e_1$ and $e_2$ are as well as supplied to the reference voltage computation setter 36 of the standoff correction computing device 28 as designated by a dashed line shown in Fig. 3. The reference voltage computation setter 36 calculates the reference voltage E0 in accordance with the supplied detected voltages $e_1$ and $e_2$.

When a command to start cutting is supplied to the control device 30, it downwards move the torch 10 to a predetermined height from the work 18 to be cut (step 150). When the torch has moved downwards to reach the predetermined height, the control device 30 actuates a limit switch (omitted from illustration) (step 152) so that the fact that the torch 10 has reached the predetermined height. Then, the control device 30 lowers the downward movement speed of the torch 10 so as to set it to the piercing height (step 154), and then the piercing operation is performed (step 156). When the piercing operation has been completed, the control device 30 further downwards moves the torch 10 so as to keep it to the aimed standoff $H_0$ (step 158) and the cutting operation is commenced (160). The aimed standoff $H_0$ varies depending upon the thickness and the material of the work 18 to be cut, the diameter of the nozzle 14 and the like, and a value previously obtained from experiments or the like has been supplied to the control device 30 from the control panel or the like. When the torch 10 has been set to keep the aimed standoff $H_0$ and the cutting operation has been commenced, the voltage detectors 24 and 26 detect the voltage at a predetermined time (for example, each 0.1 seconds) so as to supply the detected voltages $e_1$ and $e_2$ to the reference voltage computation setter 36 and the electrode consumption/standoff detector 34.

The reference voltage computation setter 36 reads the detected voltage $e_1$ or $e_2$ supplied from the voltage detectors 24 and 26 (step 162) so as to set the reference voltage $E_0$ (step 164). In accordance with the progression of the cutting operation, the reference voltage computation setter 36 outputs the reference voltage $E_0$ which has been corrected to correspond to the change of the cutting speed V to the error computing device 37 (step 166). On the other hand, also the electrode consumption/standoff detector 34 outputs the standoff signal $E_H$ which has been corrected to correspond to the consumption of the electrode 12 to the error computing device 37. Then, the cutting operation is performed similarly to the first embodiment. When the cutting operation has been completed (step 168), the torch 10 is moved upwards (step 170) and the operation is completed. By making the arc voltage at the time of the commencement of the cutting operation to be the reference voltage $E_0$ as described above, the influence of the consumption of the electrode can be eliminated and as well as the reference voltage $E_0$ can easily be set.

Although the transfer-arc-type plasma cutting machine has been described in the aforesaid embodiment, it may be a non-transfer-type cutting machine. Furthermore, the present invention may be adapted to a plasma welding machine. Although the graph possessed by the correction quantity computing device 38 was made to be point symmetrical with respect to the origin, the necessity of the point symmetric can be eliminated. In particular, it is preferable to make the absolute value of - $\Delta E_3$ to be smaller than the absolute value of + $\Delta E_3$ so as to assuredly prevent the problem that the torch 10 comes in contact with the work 18 to be cut. Furthermore, $\Delta E_1$, $\Delta E_2$, $\Delta E_3$, and the inclination of each line segment shown in Fig. 1 may be arbitrarily determined depending upon results of experiments.

## Industrial Applicability

The present invention is effective to serve as a standoff control method and an apparatus for a plasma cutting machine or a welding machine capable satisfactorily performing a cutting operation since the standoff between the torch and the work to be cut can be kept constant, capable of preventing deterioration of the working efficiency even if a double-arc is generated, and capable of properly detecting the use limit of the electrode even if the cutting conditions have been changed.

## Claims

1. A standoff control method for a plasma cutting machine which detects the arc voltage across an electrode (12) of a torch (10) or a nozzle (14) surrounding said electrode and a work (18) to be cut so as to control the standoff (Ho) between said torch and said work to be cut to a predetermined value in accordance with the detected voltage, and which detects the voltage across said electrode or said nozzle and said work to be cut so as to obtain a deviation with respect to a reference voltage; characterized in that said standoff control method comprises the step of raising the elevation speed of said torch in accordance with the degree of said deviation.

2. A standoff control method for a plasma cutting machine according to claim 1, wherein said elevation speed of said torch (10) is zero when said deviation is included by a predetermined first value range, said elevation speed of said torch is linearly raised if said deviation has exceeded said first value, and said elevation speed of said torch is linearly raised by a higher rate if said deviation has exceeded a predetermined second value.

3. A standoff control method for a plasma cutting machine according to claim 2, wherein said torch (10) is moved upwards at a high speed if said deviation has exceeded a predetermined third value.

4. A standoff control apparatus for a plasma cutting machine comprising a voltage detector (24,26) for detecting the arc voltage across an electrode (12) of a torch (10) or a nozzle (14) surrounding said electrode and a work (18) to be cut and a standoff (Ho) correction computing device (28) for subjecting said detected voltage outputted from said voltage detector and a reference voltage to a comparison so as to output a standoff correction signal, a reference voltage computation setter (36) for outputting a reference voltage across said electrode (12) or said nozzle (14) and said work (18) to be cut with respect to a predetermined standoff (Ho), an error computing device (37) for calculating a deviation between said detected voltage and said reference voltage; characterized in that said standoff correction computing device has a correction quantity computing device (38) for outputting an elevation speed signal of said torch in accordance with the degree of said deviation.

5. A standoff control apparatus for a plasma cutting machine according to claim 4, wherein said standoff (Ho) correction computing device (38) has an electrode consumption/standoff detector which receives said detected voltage so as to output, to said error computing device (37), a standoff signal obtained by correcting the degree of rise of the voltage due to the consumption of said electrode.

6. A standoff control apparatus for a plasma cutting machine according to claim 4, wherein said reference voltage computation setter (36) outputs, as a reference voltage, a voltage obtained by adding the degree of change of said arc voltage taken place due to the deviation of a cutting speed from a reference cutting speed to an arc voltage determined in accordance with said reference cutting speed for said torch.

7. A standoff control apparatus for a plasma cutting machine according to claim 4, wherein said reference voltage computation setter (36) receives said detected voltage and as well as outputs, as said reference voltage, said supplied detected voltage when said torch has been disposed to a predetermined standoff position and the cutting operation has been commenced.

## Patentansprüche

1. Brennerabstandsregelverfahren für eine Plasmaschneidmaschine, das die Lichtbogenspannung an einer Elektrode (12) eines Brenners (10) oder einer die Elektrode umgebenden Düse (14) und einem zu schneidenden Werkstück (18) ermittelt und anhand dessen den Brennerabstand (H$_0$) zwischen dem Brenner und dem zu schneidenden Werkstück auf einen der ermittelten Spannung entsprechenden, vorgegebenen Wert regelt, und das die Spannung an der Elektrode oder der Düse und dem zu schneidenden Werkstück ermittelt, um eine Abweichung in bezug auf eine Bezugsspannung zu erhalten, dadurch gekennzeichnet, daß das Brennerabstandsregelverfahren den Schritt einer Erhöhung der Anhebungsgeschwindigkeit des Brenners entsprechend dem Grad der Abweichung umfaßt.

2. Brennerabstandsregelverfahren für eine Plasmaschneidmaschine nach Anspruch 1, worin die Anhebungsgeschwindigkeit des Brenners (10) Null ist, wenn die Abweichung innerhalb eines Bereichs eines vorgegebenen ersten Wertes liegt, die Anhebungsgeschwindigkeit des Brenners linear erhöht wird, wenn die Abweichung den ersten Wert überschritten hat, und die Anhebungsgeschwindigkeit des Brenners linear um eine höhere Rate gesteigert wird, wenn die Abweichung einen vorgegebenen zweiten Wert überschritten hat.

3. Brennerabstandsregelverfahren für eine Plasmaschneidmaschine nach Anspruch 2, worin der Brenner (10) mit hoher Geschwindigkeit aufwärts bewegt wird, wenn die Abweichung einen vorgegebenen dritten Wert überschritten hat.

4. Brennerabstandsregelgerät für eine Plasmaschneidmaschine, die folgendes umfaßt: einen Spannungsmesser (24, 26) zum Ermitteln der Lichtbogenspannung an einer Elektrode (12) eines Brenners (10) oder einer die Elektrode umgebenden Düse (14) und einem zu schneidenden Werkstück (18) sowie eine Brennerabstands($H_0$)korrektur-Recheneinrichtung (28) zum Durchführen eines Vergleichs der von dem Spannungsmesser ausgegebenen Ist-Spannung mit einer Bezugsspannung zum Zwecke der Ausgabe eines Brennerabstandskorrektursignals, ein Bezugsspannung-Rechenstellglied (36) zum Ausgeben einer Bezugsspannung an der Elektrode (12) oder der Düse (14) und dem zu schneidenden Werkstück (18) in bezug auf einen vorgegebenen Brennerabstand ($H_0$), eine Regelabweichung-Recheneinnchtung (37) zum Berechnen einer Abweichung zwischen der Ist-Spannung und der Bezugsspannung, dadurch gekennzeichnet, daß die Brennerabstandskorrektur-Recheneinnchtung über eine Korrekturgrößen-Recheneinnchtung (38) zum Ausgeben eines Anhebungsgeschwindigkeitssignals des Brenners entsprechend dem Grad der Abweichung verfügt.

5. Brennerabstandsregelgerät für eine Plasmaschneidmaschine nach Anspruch 4, worin die Brennerabstands($H_0$)korrektur-Recheneinrichtung (38) ein Elektrodenabschmelz-/Brennerabstandsmeßglied besitzt, das die Ist-Spannung abnimmt und daraufhin an die Regelabweichung-Recheneinnchtung (37) ein Brennerabstandssignal ausgibt, das durch Korrigieren des Grades der Spannungserhöhung infolge des Abschmelzens der Elektrode erhalten wurde.

6. Brennerabstandsregelgerät für eine Plasmaschneidmaschine nach Anspruch 4, worin das Bezugsspannung-Rechenstellglied (36) als Bezugsspannung eine Spannung ausgibt, die erhalten wird, indem der Grad der infolge der Abweichung einer Schneidgeschwindigkeit von einer Bezugsschneidgeschwindigkeit eingetretenen Veränderung dieser Lichtbogenspannung zu einer Lichtbogenspannung addiert wird, die anhand der Bezugsschneidgeschwindigkeit für den Brenner ermittelt wird.

7. Brennerabstandsregelgerät für eine Plasmaschneidmaschine nach Anspruch 4, worin das Bezugsspannung-Rechenstellglied (36) die ermittelte Spannung abnimmt und desgleichen die übermittelte Ist-Spannung als die Bezugsspannung ausgibt, wenn der Brenner in eine vorgegebene Brennerabstandsposition gebracht und der Schneidarbeitsgang eingeleitet worden ist.

**Revendications**

1. Procédé de commande d'écartement pour une machine de découpe au plasma qui détecte la tension d'arc entre une électrode (12) d'une torche (10) ou une buse (14) entourant ladite électrode et une pièce (18) à découper de façon à commander l'écartement (Ho) entre ladite torche et ladite pièce à découper à une valeur prédéterminée conformément à la tension détectée, et qui détecte la tension entre ladite électrode ou ladite buse et ladite pièce à découper de façon à obtenir une déviation par rapport à une tension de référence, caractérisé en ce que ledit procédé de commande d'écartement comprend l'étape d'augmenter la vitesse d'élévation de ladite torche conformément au degré de ladite déviation.

2. Procédé de commande d'écartement pour une machine de découpe au plasma selon la revendication 1, dans lequel ladite vitesse d'élévation de ladite torche (10) est zéro quand ladite déviation est incluse dans un premier domaine de valeurs prédéterminé, ladite vitesse d'élévation de ladite torche est linéairement augmentée si ladite déviation dépasse ladite première valeur, et ladite vitesse d'élévation de ladite torche est linéairement augmentée plus rapidement si ladite déviation dépasse une seconde valeur prédéterminée.

3. Procédé de commande d'écartement pour une machine de découpe au plasma selon la revendication 2, dans lequel ladite torche (10) est déplacée vers le haut à une vitesse élevée si ladite déviation dépasse une troisième valeur prédéterminée.

4. Appareil de commande d'écartement pour une machine de découpe au plasma, comprenant un détecteur de tension (24,26) pour détecter la tension d'arc entre une électrode (12) d'une torche (10) ou une buse (14) entourant ladite électrode et une pièce (18) à découper et un dispositif (28) de calcul de correction d'écartement (Ho) pour soumettre ladite tension détectée provenant dudit détecteur de tension et une tension de référence à une comparaison de façon à produire un signal de correction d'écartement, un moyen pour établir un calcul de tension de référence (36) pour fournir une tension de référence entre ladite électrode (12) ou ladite buse (14) et ladite pièce (18) à découper par rapport à un écartement prédéterminé (Ho), un dispositif de calcul d'erreur (37) pour calculer une déviation entre ladite tension détectée et ladite tension de référence, caractérisé en ce que ledit dispositif de calcul de correction d'écartement présente un dispositif de calcul de quantité de correction (38) pour fournir un signal de vitesse d'élévation de ladite torche conformément au degré de ladite déviation.

5. Appareil de commande d'écartement pour une machine de découpe au plasma selon la revendication 4, dans lequel ledit dispositif (38) de calcul de correction d'écartement (Ho) présente un détecteur de consommation d'électrode/écartement qui reçoit ladite tension détectée de façon à fournir, audit dispositif de calcul d'erreur (37), un signal d'écartement obtenu en corrigeant le degré d'augmentation de la tension due à la consommation de ladite électrode.

6. Appareil de commande d'écartement pour une machine de découpe au plasma selon la revendication 4, dans lequel ledit moyen pour établir un calcul de tension de référence (36) fournit, comme tension de référence, une tension obtenue en ajoutant le degré de variation de ladite tension d'arc ayant lieu du fait de la déviation de la vitesse de coupe à partir d'une vitesse de coupe de référence à une tension d'arc déterminée conformément à ladite vitesse de coupe de référence pour ladite torche.

7. Appareil de commande d'écartement pour une machine de découpe au plasma selon la revendication 4, dans lequel ledit moyen pour établir un calcul de tension de référence (36) reçoit ladite tension détectée et fournit aussi bien, comme ladite tension de référence, ladite tension détectée fournie quand ladite torche est disposée en une position d'écartement prédéterminée et que l'opération de découpe a commencé.

# F I G . 1

UPWARD

ELEVATION
SPEED

$-\triangle E_2$

$(-)$  $-\triangle E_3$  $-\triangle E_1$  $\triangle E_1$  $\triangle E_2$  $\triangle E_3$  $(+)$

DEVIATION ( V )

DOWNWARD

# F I G . 2

32

30

12  14

ELEVATION
DEVICE

CONTROL
DEVICE

16  10

24

VOLTAGE
DETECTOR  $e_1$

STANDOFF
CORRECTION
COMPUTING
DEVICE

26

VOLTAGE
DETECTOR

$e_2$

28

$H_0$

20  18

# FIG. 3

# F I G. 4

THICKNESS t=t₁

ARC VOLTAGE(e)

t₂

t₃

STANDOFF(H)

# F I G. 5

ALUMINUM

STAINLESS STEEL

STEEL

| THICKNESS FACTOR | | NOZZLE FACTOR | |
|---|---|---|---|
| THICKNESS FACTOR | $K_t$ | NOZZLE DIAMETER | $K_N$ |
| 0.5 | 1.2 | 0.3 | 0.7 |
| 1 | 1 | 0.4 | 0.85 |
| 1.5 | 0.85 | 0.5 | 1 |
| 2 | 0.73 | 0.6 | 1.2 |
| 3 | 0.60 | ⋮ | ⋮ |
| ⋮ | ⋮ | ⋮ | ⋮ |

| STANDOFF | |
|---|---|
| $K_{S1}$ | 10.5 |
| $K_{S2}$ | 7.1 |

| SPEED FACTOR | |
|---|---|
| $K_{V1}$ | 3.1 |
| $K_{V2}$ | 2.0 |

$K_{S1}$ : ARC VOLTAGE WHEN STANDOFF IS 1.5mm

$K_{S2}$ : ARC VOLTAGE CHANGE QUANTITY WHEN STANDOFF IS CHANGED BY 1mm

# FIG. 6

ARC VOLTAGE (e)

$e_1$

$e_2$

USE LIMIT OF ELECTRODE

NUMBER OF USE OF ELECTRODE (TIME)

# FIG. 7

ARC VOLTAGE (e)

$\phi_2$ NOZZLE DIAMETER

NOZZLE $\phi_1$ DIAMETER

$e_0 + \Delta e$

$e_0$

$e_0 - \Delta e$

$V_0 - \Delta V$   $V_0$   $V_0 + \Delta V$

CUTTING SPEED (V)

# FIG. 8

```
        ( START )
            │
            ▼
150 ──  MOVE DOWNWARD  ◄─────────┐
            │                     │
            ▼                     │ NO
152 ──   ◇ LS ON ◇ ──────────────┘
            │
            │ YES
            ▼
154 ──  TO PIERCING HEIGHT
            │
            ▼
156 ──  PIERCE
            │
            ▼
158 ──  TO CUTTING HEIGHT
            │
            ▼
160 ──  START CUTTING
            │
            ▼
162 ──  READ VOLTAGE
            │
            ▼
164 ──  SET REFERENCE VOLTAGE
            │
            ▼
166 ──  OUTPUT CORRECTED REFERENCE
        VOLTAGE. AND CUT
            │
            ▼
168 ──  COMPLETE CUT
            │
            ▼
170 ──  MOVE UPWARDS
            │
            ▼
        ( END )
```